# EUROPEAN PATENT SPECIFICATION

(11) **EP 0 782 590 B1**
(45) Date of publication and mention of the grant of the patent: **30.06.1999**
(21) Application number: 95932353.6
(22) Date of filing: 13.09.1995
(51) Int. Cl.: C08L 23/08

(54) **FLEXIBLE NONHALOGEN-CONTAINING THERMOPLASTIC POLYOLEFIN COMPOSITIONS**
FLEXIBLE NICHT-HALOGEN ENTHALTENDE THERMOPLASTISCHE POLYOLEFINZUSAMMENSETZUNG
COMPOSITION DE POLYOLEFINES THERMOPLASTIQUES SOUPLES NE RENFERMANT PAS D'HALOGENES

(30) Priority: 22.09.1994 EP 94202736
(43) Date of publication of application: 09.07.1997
(73) Proprietor: E.I. DU PONT DE NEMOURS AND COMPANY, Wilmington Delaware 19898 (US)
(72) Inventor: GARCIA DURAN, Juan-Antonio, CH-1208 Geneva (CH); ROLLAND, Loic, Pierre, F-01220 Divonne-les-Bains (FR)
(74) Representative: Abitz, Walter, Dr.-Ing.
(86) International application number: US9511052
(87) International publication number: WO9609331

(56) References cited:
- WO-A-89/06256
- WO-A-93/19118
- US-A- 4 775 567
- US-A- 5 089 556
- US-A- 5 395 881
- US-A- 5 434 217

## Description

This invention relates to polyolefin compositions and more particularly to such compositions which are flexible and to shaped articles made from them.

### Background Discussion:

Polyvinyl chloride (PVC) sheets have been on the market for many years and have become the standard roof liner material in the housing industry. PVC sheets are characterized as being flexible over a variable temperature range, heat-sealable, and oil-resistant. However, with the trend toward a chlorine-free environment, there is a need for a PVC sheeting alternative. Ethylene-propylene-diamine-methylene (EPDM) rubbers are alternatives, but these are difficult to seal. Thus, there is a need for roof and other types of liner sheets which are thermoplastic and heat-sealable, halogen-free and flexible.

WO 93/19118 and WO 89/06256 disclose PVC-free compositions that are suitable for use as coatings for electrical cables. These compositions contain several components that are similar to those described, but lack, i.a., the terpolymer described herein.

### Summary of the Invention

According to the present invention there is provided a flexible, nonhalogen-containing polymer composition which comprises a blend of:
(1) ethylene vinyl acetate copolymer containing 30-90% by weight ethylene and 10-70% by weight vinyl acetate,
(2) very low density polyethylene having a specific gravity less than 0.920, and
(3) ethylene vinyl acetate carbon monoxide terpolymer containing at least 30% by weight ethylene, at least 10% by weight vinyl acetate and 1-20% by weight carbon monoxide.
   The composition according to the invention may further contain:
(4) a compatibilizer blend comprising
   (i) a polar olefinic polymer containing 15 to 60% by weight vinyl acetate; and
   (ii) a non-polar olefinic polymer,
   wherein one of components (4)(i) and (4)(ii) contains 0.01 to 10% by weight of glycidyl acrylate or methacrylate or a derivative thereof, and the other of components (4)(i) and (4)(ii) contains 0.01 to 10% by weight of a carboxylic acid or a derivative thereof.

Common additives which may be included in the composition of the present invention include aluminium trihydrate (for flame retardancy), antioxidants, titanium dioxide (for UV resistance and to give a white color to the product) and UV stabilizers.

### Detailed Description of the Invention

The present invention relates to flexible, non-halogen containing thermoplastic polymer blends which are useful in sheet form, and particularly as roofing liners. These blends generally are formed by combining an ethylene vinyl acetate (EVA) copolymer and a very low density polyethylene (VLDPE) having a specific gravity below 0.920, both of which are chlorine free.

The blend further contains an ethylene vinyl acetate carbon monoxyde (EVACO) terpolymer. Compatibilizing agents can be added in order to improve the properties of the blend.

Polymer blends according to the present invention can be formed into sheets which have many properties comparable to polyvinyl chloride (PVC) containing blends, but with better elongation and being free from chlorine.

Unless otherwise stated, percentage weight ranges for each of the components in the composition of the present invention are calculated exclusive of any additives which may be present.

The EVA copolymer (component (1)) useful in this invention preferably contains 30-90% by weight of ethylene and 10-70% by weight of vinyl acetate, more preferably 55-75 % by weight of ethylene and 25-45 % by weight of vinyl acetate. In general, these EVA's have a melt flow index (MFI) in the range of 0.05-100 g/10 min., preferably less than 50 g/l0min. as determined by ASTM D-1238 (measured at 2.16 kg and 190 °C) and are well-known in the art.

Component (1) preferably comprises 5-65% by weight of the composition of the present invention, more preferably 20-50% by weight, still more preferably 20-30% by weight.

The VLDPE (component (2)) is used herein to mean polyethylene having a density below 0.920 g/cm³ and includes linear polyethylene as well as copolymers of ethylene which are thermoplastic resins, but non-polar. The term VLDPE includes copolymers of ethylene and other alpha-olefins such as 1-butene, 1-hexene, and 1-octene. The processes for producing VLDPE are well known in the art and commercial grades of this polyolefin are available.

Component (2) preferably comprises 5-65% by weight of the composition of the present invention, more preferably 10-40% by weight, still more preferably 10-30% by weight.

The EVACO terpolymer (component (3)) useful in this invention preferably contains at least 30% by weight of ethylene, at least 10% by weight of vinyl acetate and 1-20% by weight of carbon monoxide, more preferably 55-65% by weight of ethylene and 20-30% by weight of vinyl acetate and 5-15% by weight carbon monoxide. In general, these EVACO's have a melt flow index (MFI) in the range of 1-50 g/10 min., preferably in the range of 10-40 g/10min. as determined by ASTM D-1238 (measured at 2,16 kg and 190 °C) and are well-known in the art.

Component (3) preferably comprises 5-65% by weight of the composition of the present invention, more preferably 20-50% by weight, still more preferably 20-30% by weight.

The compatibilizing polymer (4)(i) in the compatibilizer blend (component (4)) is a relatively polar olefin polymer containing 15-60% by weight vinyl acetate, more preferably 25-40% by weight vinyl acetate, and optionally containing 1-20% by weight of carbon monoxide; compatibilizing polymer (4)(ii)) is a substantially non-polar olefin polymer containing less than 15% by weight of a copolymerized polar monomer, more preferably containing less than 5% by weight of a copolymerized polar monomer.

One of components (4)(i) and (4)(ii) will contain 0.01-10% by weight, preferably 0.5-5% by weight, of reactive groups selected from glycidyl acrylate or methacrylate or a derivative thereof, and the other of components (4)(i) and (4)(ii) will contain 0.01-10% by weight, preferably 0.5-5% by weight, of reactive groups selected from a carboxylic acid or a derivative thereof (such as an anhydride).

This olefin backbone polymer of components (4)(i) and (4)(ii) can be functionalized by grafting the desired reactive group to the polymer by known processes. The grafting of the polyolefin can be carried out in the melt state, in solution or in suspension as described in the state-of-the-art literature. While the melt viscosity of the modified polyolefin is not restricted, the most effective compatibilization with modified polyolefin is found if the melt index, measured at 2.16 kg and 190°C is between 1 to 50 g/10 min. Glycidyl methacrylate and maleic anhydride are the preferred functionalizing agents. Such modified polyolefins can be prepared as described, for example, in published European Patent Application Nos. 370,735 and 370,736.

The compatibilizer blend will contain 20-80% by weight component (4)(i) and 80-20% by weight component (4)(ii), more preferably 25-35% by weight component (4)(i) and 65-75% by weight component (4)(ii).

When present, component (4) preferably comprises 0.5-10% by weight of the composition of the present invention, more preferably 3-5% by weight.

In addition to its polymer components, the composition of the present invention can be blended with common additives such as reinforcing and non-reinforcing fillers, flame retardant fillers such as aluminium trihydrate, antioxidants, UV stabilizers, lubricants (e.g., oleamide), antiblocking agents, antistatic agents, waxes, coupling agents for fillers, pigments, titanium dioxide, talc and other processing aids known in the polymer compounding art. The pigments and other additives may comprise up to about 50 weight percent of the total composition based on polymer components plus additives (the polymer components being present in amounts with respect to each other in the proportions previously specified); preferably pigments and fillers comprise above 0 to 30 weight percent of the total composition.

The blends of the invention can be prepared by mixing the polymeric ingredients and optional additives by use of conventional masticating equipment, for example, a rubber mill, Brabender Mixer, Banbury Mixer, Buss-ko kneader, Farrel continuous mixer or twin screw continuous mixer. Mixing times should be sufficient to obtain homogeneous blends. Satisfactory mixing times depend upon the types of polymers and upon the type and amount of compatibilizer. Typically, mixing times of about 5 minutes are satisfactory. If the polymer blend is obviously non-homogeneous, additional mixing is required.

The invention can be further understood by the following examples in which parts and percentages are by weight or in parts per hundred rubber (phr) and temperatures are in degrees Celsius.

### Examples 1-4

### Legend

MFI = melt flow index
EVA - ethylene vinyl acetate
VLDPE = very low density polyethylene
MAH = maleic anhydride
EGMA = ethylene glycidyl methacrylate
EVACO = ethylene vinyl acetate carbon monoxide

### Procedure

A blend is prepared by melt-compounding the following components in the proportions set forth in Table 1 below.
- EVA₁ (60% ethylene and 40% vinyl acetate) having a MFI (190°/2.16 kg) of 0.8
- EVA₂ (72% ethylene and 28% vinyl acetate) having a MFI (190°/2.16 kg) of 3.0
- EVA₃ (66% ethylene and 33% vinyl acetate) having a MFI (190°/2.16 kg) of 18, grafted with 1% MAH
- VLDPE₁ having a density of 0.911 g/cm³ and a MFI (190°/2.16 kg) of 2.2
- VLDPE₂ having a density of 0.887 g/cm³ and a MFI (190°/2.16 kg) of 1.5
- EVACO (62.5% ethylene, 28.5% vinyl acetate and 9% carbon monoxide) having a MFI (190°/2.16 kg) of 35
- EGMA (1.8 % glycidyl methacrylate having a MFI (280°/2.16 kg) of 5
- titanium dioxide
- aluminium trihydrate
- UV stabilizers (blend of 50% by weight TINUVIN® 622 LD (an
- antioxidant - phenolic type available under the name IRGANOX® 1010 from Ciba

Melt compounding is carried out on a two roll mill with batches from 100 grams at 130-150°C for ca. 5 minutes. The milled product is formed into a testing plaque in a hydraulic press at 130-150°C for 5 minutes. Afterwards stress-strain testing (ASTM D-638) and Shore A hardness (DIN 53505) are carried out. Results are shown in Table 1.

**Table 1**

| **Example numbers** | **1** | **2** | **3** |
|---|---|---|---|
| EVA₁ | - | - | 5.0 |
| EVA₂ | 22.6 | 25.2 | 14.2 |
| EVACO | 25.0 | 25.0 | 23.0 |
| VLDPE₁ | 5.0 | 11.2 | - |
| VLDPE₂ | 13.6 | 16.5 | 10.0 |
| EGMA | 1.0 | - | 4.0 |
| EVA₃ + 1% MAH | 1.9 | - | 4.0 |
| Titanium dioxide | 5.0 | 1.0 | 5.0 |
| Aluminium trihydrate | 20.0 | 20.0 | 30.0 |
| UV stabilizer | 0.4 | 0.6 | 0.4 |
| Antioxidant | 0.5 | 0.5 | 0.4 |
| Zinc stearate | 5.0 | - | 4.0 |
| Tensile strength (MPa) | 12.0 | 13.5 | 13.5 |
| Tensile elongation (%) | 740 | 750 | 700 |
| Shore A hardness | 78 | 80 | 80 |
| Specific gravity (g/cm³) | 1.150 | 1.094 | 1.180 |

Moreover, it can be shown that flame retardancy and chemical resistance are improved in formulations containing compatibilizers in comparison to those which do not contain compatibilizers.

## Claims

1. A flexible, nonhalogen-containing polymer composition comprising a blend of
(1) ethylene vinyl acetate copolymer containing 30-90% by weight ethylene and 10-70% by weight vinyl acetate;
(2) very low density polyethylene having a specific gravity less than 0.920; and
(3) ethylene vinyl acetate carbon monoxide terpolymer containing at least 30% by weight ethylene, at least 10% by weight vinyl acetate and 1-20% by weight carbon monoxide.

2. A blend according to claim 1 wherein component (1) comprises 5-65 % by weight of the blend, component (2) comprises 5-65 % by weight of the blend, and component (3) comprises 5-65 % by weight of the blend.

3. A blend according to claim 1 wherein component (1) comprises 20-50% by weight of the blend, component (2) comprises 10-40% by weight of the blend and component (3) comprises 20-50% by weight of the blend.

4. A blend according to claim 1 further comprising
(4) a compatibilizer blend comprising
(i) a polar olefinic polymer containing 15 to 60% by weight vinyl acetate; and
(ii) a non-polar olefinic polymer
wherein one of components (4)(i) and (4)(ii) contains 0.01 to 10% by weight of glycidyl acrylate or methacrylate or a derivative thereof, and the other of components (4)(i) and (4)(ii) contains 0.01 to 10% by weight of a carboxylic acid or a derivative thereof.

5. A blend according to claim 4 wherein component (4) comprises 0.5-10% by weight of the blend.

6. A shaped article formed from a blend according to claim 1.

## Patentansprüche

1. Flexible, nicht-Halogen-enthaltende Polymerzusammensetzung, umfassend eine Mischung von
(1) Ethylen/Vinylacetat-Copolymerem, welches 30 bis 90 Gew.-% Ethylen und 10 bis 70 Gew.-% Vinylacetat enthält;
(2) Polyethylen sehr niedriger Dichte mit einer relativen Dichte von weniger als 0,920; und
(3) Ethylen/Vinylacetat/Kohlenmonoxid-Terpolymerem, welches wenigstens 30 Gew.-% Ethylen, wenigstens 10 Gew.-% Vinylacetat und 1 bis 20 Gew.-% Kohlenmonoxid enthält.

2. Mischung nach Anspruch 1, bei welcher die Komponente (1) 5 bis 65 Gew.-% der Mischung, die Komponente (2) 5 bis 65 Gew.-% der Mischung und die Komponente (3) 5 bis 65 Gew.-% der Mischung umfassen.

3. Mischung nach Anspruch 1, bei welcher die Komponente (1) 20 bis 50 Gew.-% der Mischung, die Komponente (2) 10 bis 40 Gew.-% der Mischung und die Komponente (3) 20 bis 50 Gew.-% der Mischung umfassen.

4. Mischung nach Anspruch 1, welche weiterhin umfaßt (4) eine verträglichmachende Mischung, umfassend
(i) ein polares olefinisches Polymeres, welches 15 bis 60 Gew.-% Vinylacetat enthält; und
(ii) ein nicht-polares olefinisches Polymeres, wobei eine der Komponenten (4) (i) und (4) (ii) 0,01 bis 10 Gew.-% Glycidylacrylat oder -methacrylat oder ein Derivat davon enthält, und die andere der Komponenten (4)(i) und (4) (ii) 0,01 bis 10 Gew.-% einer Carbonsäure oder eines Derivates davon enthält.

5. Mischung nach Anspruch 4, bei welcher die Komponente (4) 0,5 bis 10 Gew.-% der Mischung umfaßt.

6. Formgegenstand, der aus einer Mischung nach Anspruch 1 geformt ist.

## Revendications

1. Composition polymère flexible, ne contenant pas d'halogène, comprenant un mélange de :
(1) un copolymère d'éthylène et d'acétate de vinyle contenant de 30 à 90% en poids d'éthylène et de 10 à 70% en poids d'acétate de vinyle;
(2) un polyéthylène de très basse densité ayant un poids volumique inférieur à 0,920, et
(3) un terpolymère d'éthylène, d'acétate de vinyle et de monoxyde de carbone contenant au moins 30% en poids d'éthylène, au moins 10% en poids d'acétate de vinyle et de 1 à 20% en poids de monoxyde de carbone.

2. Mélange suivant la revendication 1, dans lequel le composant (1) constitue de 5 à 65% en poids du mélange, le composant (2) constitue de 5 à 65% en poids du mélange, et le composant (3) constitue de 5 à 65% en poids du mélange.

3. Mélange suivant la revendication 1, dans lequel le composant (1) constitue de 20 à 50% en poids du mélange, le composant (2) constitue de 10 à 40% en poids du mélange, et le composant (3) constitue de 20 à 50% en poids du mélange.

4. Mélange suivant la revendication 1, comprenant en outre
(4) un mélange compatibilisant comprenant
(i) un polymère oléfinique polaire contenant de 15 à 60% en poids d'acétate de vinyle, et
(ii)un polymère oléfinique non polaire,
l'un des composants (4)(i) et (4)(ii) contenant de 0,01 à 10% en poids d'acrylate ou de méthacrylate de glycidyle ou un dérivé de ceux-ci, et l'autre des composants (4) (i) et (4)(ii) contenant de 0,01 à 10% en poids d'un acide carboxylique ou d'un dérivé de celui-ci.

5. Mélange suivant la revendication 4, dans lequel le composant (4) constitue de 0,5 à 10% en poids du mélange.

6. Article mis en forme à partir d'un mélange suivant la revendication 1.
